# EUROPEAN PATENT APPLICATION

(11) **EP 4 697 586 A1**
(43) Date of publication of application: **18.02.2026**
(21) Application number: 24788489.3
(22) Date of filing: 11.03.2024
(51) Int. Cl.: H02P 31/00

(54) **CONTROL DEVICE AND CONTROL SYSTEM**

(30) Priority: 12.04.2023 JP 2023065137
(71) Applicant: Panasonic Intellectual Property Management Co., Ltd., Kadoma-shi, Osaka 571-0057 (JP)
(72) Inventor: SASAKI, Kenji, Osaka 471-0057 (JP); NAMBA, Akihiko, Osaka 471-0057 (JP); KISHIBE, Taro, Osaka 471-0057 (JP)
(74) Representative: SSM Sandmair
(86) International application number: PCT/JP2024/009399
(87) International publication number: WO 2024/214459

(57) **Abstract**

To suppress occurrence of a failure or a malfunction in an encoder via a communication line when the encoder is removed from and attached to a control device. Control device (2) is a control device that controls motor (4) based on a detection signal of encoder (3) that detects an operation position of motor (4). Control device (2) includes communicator (22), pull-up resistor (R1), first power supply (26), first switch (SW1), and controller (27). Communicator (22) transmits and receives a detection signal to and from encoder (3) via communication line (L2). Pull-up resistor (R1) is connected to communication line (L2). First switch (SW1) is provided in first electrical path (L7) connecting first power supply (26) and pull-up resistor (R1), and completes and interrupts first electrical path (L7). Controller (27) controls first switch (SW1).

## Description

### TECHNICAL FIELD

The present disclosure relates to a control device and a control system, and more particularly to a control device that controls a motor on the basis of a detection signal of an encoder that detects an operation position of the motor, and a control system including the control device.

### BACKGROUND ART

A work machine for a board described in PTL 1 includes a multi-axis rotary servo amplifier (control device), an encoder, and a motor. The encoder detects a rotation angle of the motor. The multi-axis rotary servo amplifier can communicate with the encoder via a multiplexing communication device. The multi-axis rotary servo amplifier controls the motor on the basis of a detection signal of the encoder received via the multiplexing communication device.

### Citation List

### Patent Literature

PTL 1: International Publication No. WO 2017/179156

### SUMMARY OF THE INVENTION

In a case where a communication line of the multiplexing communication device is connected to a power supply via a pull-up resistor in the work machine for a board of PTL 1, a surge current of the power supply might flow to the encoder via the pull-up resistor and the communication line when the encoder is attached to the control device, and a failure or a malfunction might occur in the encoder. In addition, when the encoder is removed from the control device in a state where a voltage is applied to the communication line, a failure or a malfunction might occur in the encoder.

An object of the present disclosure is to provide a control device and a control system capable of suppressing occurrence of a failure or a malfunction in an encoder via a communication line when the encoder is removed from or attached to the control device.

A control device according to an aspect of the present disclosure is a control device that controls a motor based on a detection signal of an encoder that detects an operation position of the motor. The control device includes a communicator, a pull-up resistor, a first power supply, a first switch, and a controller. The communicator transmits and receives the detection signal to and from the encoder via a communication line. The pull-up resistor is connected to the communication line. The first switch is provided in a first electrical path connecting the first power supply and the pull-up resistor, and completes and interrupts the first electrical path. The controller controls the first switch.

A control system according to another aspect of the present disclosure includes the control device, the encoder, and the motor.

With the control device and the control system in the present disclosure, there is an effect of suppressing occurrence of a failure or a malfunction in the encoder via the communication line when the encoder is removed from and attached to the control device.

### BRIEF DESCRIPTION OF THE DRAWINGS

Fig. 1 is a configuration diagram of a control system according to an exemplary embodiment.
Fig. 2 is a configuration diagram of a control system according to a first modification.
Fig. 3 is a configuration diagram of a control system according to a second modification.
Fig. 4 is a flowchart illustrating a first operation example of a controller according to the second modification.
Fig. 5 is a flowchart illustrating a second operation example of the controller according to the second modification.
Fig. 6 is a configuration diagram of a control system according to a third modification.
Fig. 7 is a configuration diagram of a control system according to a fourth modification.
Fig. 8 is a partially enlarged view of Fig. 7, and is a configuration diagram illustrating a connector connection state.
Fig. 9 is a configuration diagram illustrating a connector separation state in the control system according to the fourth modification.

### DESCRIPTION OF EMBODIMENT

### (1) Exemplary Embodiment

A control device and a control system according to an exemplary embodiment of the present disclosure will be described hereinafter with reference to the drawings.

### (1-1) Outline of Control Device

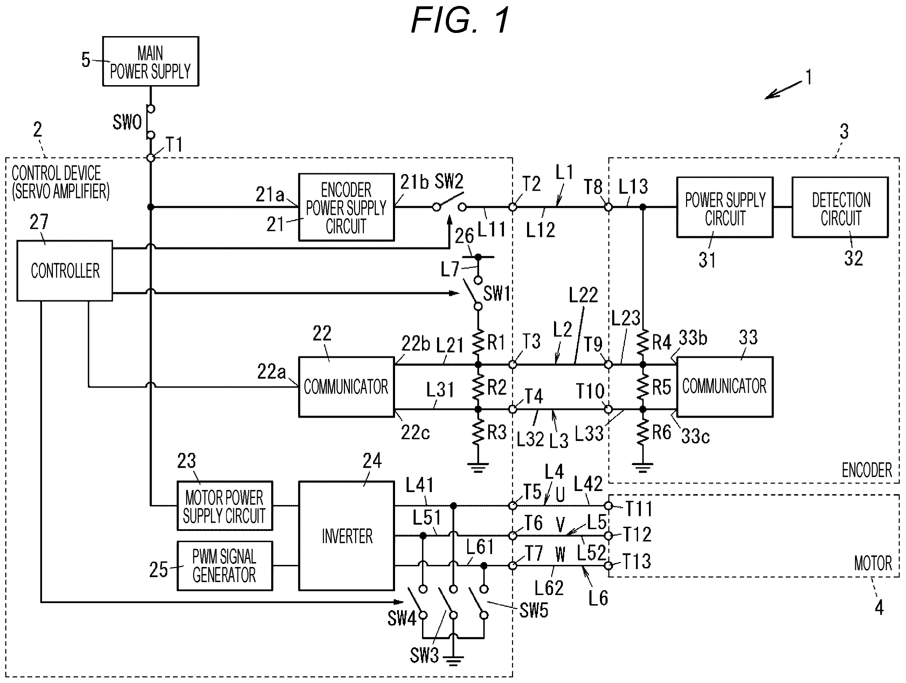

Fig. 1 is a configuration diagram of control system 1 according to the present exemplary embodiment. As illustrated in Fig. 1, control device 2 according to the present exemplary embodiment controls motor 4 on the basis of a detection signal of encoder 3 that detects an operation position of motor 4. Here, motor 4 is, for example, a motor such as a servomotor used in a semiconductor manufacturing apparatus or a production robot. Note that motor 4 is not limited to a motor such as a servomotor used in a semiconductor manufacturing apparatus or a production robot. Control device 2 includes communicator 22, pull-up resistor R1, a first power supply (for example, pull-up power supply 26), first switch SW1, and controller 27. Communicator 22 is, for example, a communication element including an electronic circuit, and can transmit and receive detection signals to and from encoder 3 via communication line L2. Pull-up resistor R1, termination resistor R2, and pull-down resistor R3 are electrically connected to communication line L2. First switch SW1 is provided in a first electrical path (for example, electrical path L7) connecting the first power supply (pull-up power supply 26) and pull-up resistor R1, and completes and interrupts the first electrical path (electrical path L7). Controller 27 controls first switch SW1.

With this configuration, encoder 3 can be attached to and removed from control device 2 in a state where the first electrical path (electrical path L7) is interrupted by first switch SW1. As a result, it is possible to suppress occurrence of a failure or a malfunction in encoder 3 via communication line L2 when encoder 3 is removed from and attached to control device 2. More specifically, it is possible to suppress occurrence of a failure or a malfunction in encoder 3 due to a surge current flowing from a first power supply (pull-up power supply 26) to encoder 3 through communication line L2 when encoder 3 is attached to control device 2 and it is possible to suppress occurrence of a failure or a malfunction in encoder 3 due to sudden interruption of communication line L2 (forcible detachment of communication line L2) when encoder 3 is removed from control device 2.

In addition, control system 1 according to the present exemplary embodiment includes control device 2, encoder 3, and motor 4. With this configuration, control system 1 including control device 2 can be provided.

### (1-2) Detailed Description of Control System

As illustrated in Fig. 1, control system 1 includes control device 2 (also referred to as a servo amplifier), encoder 3, motor 4, and main power supply 5.

In control system 1, encoder 3 detects a rotational position (operation position) of motor 4, and control device 2 controls motor 4 on the basis of a detection result of encoder 3. This control system 1 is suitable for controlling, for example, a servomotor used in a semiconductor manufacturing apparatus or a production robot as motor 4.

### (1-2-1) Main Power Supply

Main power supply 5 is an alternating current (AC) power supply such as a commercial power supply. As illustrated in Fig. 1, main power supply 5 supplies a power supply voltage to control device 2, encoder 3, and motor 4. In the present exemplary embodiment, the power supply voltage is supplied from main power supply 5 to control device 2, and the power supply voltage is supplied from control device 2 to encoder 3 and motor 4. Main power supply 5 is connected to power input terminal T1 of control device 2 via main power switch SW0.

### (1-2-2) Control Device

Control device 2 controls motor 4 on the basis of the rotational position of motor 4 detected by encoder 3. As illustrated in Fig. 1, control device 2 includes a plurality of external terminals (power input terminal T1, power output terminal T2, communication terminals T3, T4, and power feeding terminals T5 to T7), encoder power supply circuit 21, communicator 22, motor power supply circuit 23, inverter 24, pulse width modulation (PWM) signal generator 25, pull-up power supply 26, pull-up resistor R1, termination resistor R2, pull-down resistor R3, first switch SW1, second switch SW2, first short-circuiting switch SW3 to third short-circuiting switch SW5, and controller 27.

Power input terminal T1 is a terminal to which a voltage (AC voltage) from main power supply 5 is input. Power input terminal T1 is connected to main power supply 5 via main power switch SW0.

Power output terminal T2 is a terminal for outputting a voltage (direct current (DC) voltage) generated by encoder power supply circuit 21 to encoder 3. Power output terminal T2 is connected to a power input terminal T8 (described later) of encoder 3 via power cable L12.

Note that power cable L12 and electrical paths L11, L13 to be described later constitute power supply line L1 connecting encoder power supply circuit 21 and power supply circuit 31 in encoder 3.

Communication terminals T3, T4 are terminals for communication connection with encoder 3. Communication terminals T3, T4 are connected to communication terminals T9, T10 (described later) of encoder 3 via communication cables L22, L32.

Note that communication cable L22 and electrical paths L21, L23 to be described later constitute one communication line L2 among two communication lines L2, L3 connecting communicator 22 and communicator 33 in encoder 3. In addition, communication cable L32 and electrical paths L31, L33 to be described later constitute another communication line L3 among two communication lines L2, L3.

Power feeding terminals T5 to T7 are terminals for outputting a three-phase AC voltage generated by motor power supply circuit 23 to motor 4. Power feeding terminals T5 to T7 are connected to power feeding terminals T11,T12, T13 of motor 4 via power feeding cables L42, L52, L62.

Note that power feeding cable L42 and electrical path L41 to be described later constitute a U-phase power feeding line L4 connecting inverter 24 and U-phase power feeding terminal T11 of the motor. In addition, power feeding cable L52 and electrical path L51 to be described later constitute V-phase power feeding line L5 connecting inverter 24 and V-phase power feeding terminal T12 of the motor. Power feeding cable L62 and electrical path L61 to be described later constitute W-phase power feeding line L6 connecting inverter 24 and W-phase power feeding terminal T13 of the motor.

Encoder power supply circuit 21 generates a power supply voltage (DC voltage) for the encoder from the power supply voltage (AC voltage) of main power supply 5. Encoder power supply circuit 21 includes, for example, an AC/DC converter and a transformer. The AC/DC converter converts the power supply voltage (AC voltage) of main power supply 5 into a DC voltage. The transformer transforms the DC voltage obtained as a result of the conversion by the AC/DC converter into a DC voltage having a predetermined voltage value (for example, 5 V).

Encoder power supply circuit 21 includes inputter 21a and outputter 21b. Inputter 21a is a portion that inputs the power supply voltage of main power supply 5 input to power input terminal T1 to encoder power supply circuit 21, and is connected to power input terminal T1. Outputter 21b is a portion that outputs the DC voltage generated by encoder power supply circuit 21 from encoder power supply circuit 21, and is connected to power output terminal T2 via electrical path L11. Second switch SW2 is disposed in electrical path L11.

Second switch SW2 is disposed in electrical path L11, and completes and interrupts electrical path L11 on the basis of a control signal from controller 27. As a result, the supply of the power supply voltage from encoder power supply circuit 21 to encoder 3 and a stop thereof are switched.

Communicator 22 performs data communication with communicator 33 (described later) of encoder 3 in accordance with a control signal from controller 27. For example, communicator 22 performs two-wire communication with communicator 33 of encoder 3 using, for example, two communication lines L2, L3. Communicator 22 receives rotational position information transmitted from communicator 33 of encoder 3, and transmits a control signal for encoder 3 to communicator 33 of encoder 3. The rotational position information is information regarding the rotational position of motor 4 detected by encoder 3.

Communicator 22 has a transmission mode and a reception mode. The transmission mode is an operation mode in which transmission data (for example, a control signal) is transmitted from communicator 22 to communicator 33 of encoder 3 via communication lines L2, L3. The reception mode is an operation mode in which communicator 22 receives received data (for example, rotational position information) from communicator 33 of encoder 3 via communication lines L2, L3. The operation mode of communicator 22 is switched to the transmission mode or the reception mode in accordance with a control signal of controller 27.

communicator 22 includes two signal input/output portions 22b, 22c. Two signal input/output portions 22b, 22c input and output data for data communication (the control signal and the rotational position information), and are connected to communication terminals T3, T4 by electrical paths L21, L31, respectively.

Pull-up power supply 26 is a DC power supply (for example, 5 V) for pulling up electrical path L21 (that is, a portion of communication line L2 in control device 2). Pull-up power supply 26 is generated from, for example, main power supply 5 input to power input terminal T1.

Pull-up resistor R1, termination resistor R2, and pull-down resistor R3 are connected in series between pull-up power supply 26 and the ground. Pull-up resistor R1, termination resistor R2, and pull-down resistor R3 are arranged in this order from pull-up power supply 26 toward the ground. Electrical path L21 is connected to a node between pull-up resistor R1 and termination resistor R2. Electrical path L31 is connected to a node between termination resistor R2 and pull-down resistor R3. First switch SW1 is disposed in electrical path L7 connecting pull-up power supply 26 and pull-up resistor R1. Completion and interruption of electrical path L7 are switched by switching on and off of first switch SW1, and pull-up resistor R1 of communication line L2 is enabled or disabled by this switching of completion and interruption. When pull-up resistor R1 is enabled, an input voltage of signal input/output portion 22b of communicator 22 is pulled up. An input voltage of signal input/output portion 22c of communicator 22 is pulled down by pull-down resistor R3.

First switch SW1 is disposed in electrical path L7, and switches completion and interruption of electrical path L7 on the basis of a control signal from controller 27. As a result, the pull-up of the voltage of electrical path L21 (that is, the input voltage of signal input/output portion 22b of communicator 22) is enabled or disabled.

Motor power supply circuit 23 generates a power supply voltage (DC voltage) for the motor from the power supply voltage of main power supply 5. Motor power supply circuit 23 includes, for example, an AC/DC converter and a transformer. The AC/DC converter converts the power supply voltage (AC voltage) of main power supply 5 into a DC voltage. The transformer transforms the DC voltage obtained as a result of the conversion by the AC/DC converter into a DC voltage having a predetermined voltage value.

Inverter 24 converts the DC voltage generated by motor power supply circuit 23 into a three-phase AC voltage, and supplies the three-phase AC voltage to motor 4. Inverter 24 includes, for example, six transistors. The six transistors include three sets of transistors, and each set includes two transistors connected in series with each other. The three sets are connected in parallel with one another. A DC voltage generated by motor power supply circuit 23 is applied to the three sets in parallel with one another. Connection points between the two transistors of the three sets are connected to three power feeding terminals T5 to T7 via electrical paths L41,L51, L61, respectively, and are connected to three power feeding terminals T11,T12, T13 of motor 4 via power feeding cables L42,L52, L62, respectively.

First short-circuiting switch SW3, second short-circuiting switch SW4, and third short-circuiting switch SW5 are disposed between electrical paths L41,L51, L61 and the ground, respectively.

First short-circuiting switch SW3, second short-circuiting switch SW4, third short-circuiting switch SW5 constitute a dynamic brake for stopping motor 4. First short-circuiting switch SW3 is disposed in a branch electrical path connecting U-phase power feeding line L4 (more specifically, electrical path L41) and the ground, and switches completion and interruption of the branch electrical path on the basis of a control signal from controller 27. Second short-circuiting switch SW4 is disposed in a branch electrical path connecting V-phase power feeding line L5 (more specifically, electrical path L51) and the ground, and switches completion and interruption of the branch electrical path on the basis of a control signal from controller 27. Third short-circuiting switch SW5 is disposed in a branch electrical path connecting W-phase power feeding line L6 (more specifically, electrical path L61) and the ground, and switches completion and interruption of the branch electrical path on the basis of a control signal from controller 27. By closing first short-circuiting switch SW3, second short-circuiting switch SW4, and third short-circuiting switch SW5, discharge time of motor 4 can be shortened, so that motor 4 can be stopped faster.

Note that, in the present exemplary embodiment, a short-circuiting switch (first short-circuiting switch SW3 to third short-circuiting switch SW5) is provided between each of three power feeding lines L4 to L6 and the ground. It is sufficient, however, that a short-circuiting switch is provided in at least one of three power feeding lines L4 to L6.

PWM signal generator 25 performs PWM (Pulse Width Modulation) control on the six transistors of inverter 24 on the basis of a control signal from controller 27. Through this control, inverter 24 converts the DC voltage from motor power supply circuit 23 into a three-phase AC voltage, and switches the supply and a stop of the three-phase AC voltage to motor 4. In addition, inverter 24 changes rotational speed of motor 4 through the above control.

Controller 27 controls each of control targets (for example, first switch SW1, second switch SW2, communicator 22, and first short-circuiting switch SW3 to third short-circuiting switch SW5) by outputting a control signal to the control target. More specifically, controller 27 controls switching between completion and interruption of electrical path L7 by controlling switching between on and off of first switch SW1 using a control signal. As a result, enabling and disabling of pull-up of the input voltage of signal input/output portion 22b of communicator 22 are controlled. In addition, controller 27 controls switching between on and off of second switch SW2 using a control signal, thereby controlling switching between completion and interruption of electrical path L11 (that is, power supply line L1). As a result, switching between the supply and a stop of the power supply voltage supplied from encoder power supply circuit 21 to power supply circuit 31 of encoder 3 is controlled. In addition, controller 27 switches the operation mode of communicator 22 to the transmission mode or the reception mode using a control signal. As a result, the operation mode of communicator 22 is switched to the transmission mode or the reception mode. In addition, controller 27 controls switching between on and off of first short-circuiting switch SW3 to third short-circuiting switch SW5 using a control signal, thereby controlling switching between completion and interruption between power feeding lines L4 to L6 and the ground. As a result, switching between operation and non-operation of the dynamic brake of motor 4 is controlled.

### (1-2-3) Encoder

As illustrated in Fig. 1, encoder 3 detects the rotational position (operation position) of motor 4. In the present exemplary embodiment, since motor 4 is a rotary motor, encoder 3 detects the rotational position of motor 4. When motor 4 is a linear motor that operates linearly, encoder 3 detects a moving position of the motor.

Encoder 3 includes power input terminal T8, communication terminals T9, T10, power supply circuit 31, detection circuit 32, communicator 33, pull-up resistor R4, termination resistor R5, and pull-down resistor R6.

Power input terminal T8 is a terminal to which a voltage (DC voltage) from encoder power supply circuit 21 is input. Power input terminal T8 is connected to power supply circuit 31 by electrical path L13. In addition, power input terminal T8 is connected to power output terminal T2 of control device 2 via power cable L12.

Communication terminals T9, T10 are terminals for communication connection with control device 2. Communication terminals T9, T10 are connected to communication terminals T3, T4 of control device 2 via communication cables L22, L32.

Power supply circuit 31 transforms (steps down) a DC voltage (for example, 5 V) supplied from encoder power supply circuit 21 of control device 2 to generate a power supply voltage (for example, 3 V) for an internal circuit (for example, detection circuit 32 and communicator 33) of encoder 3.

Detection circuit 32 operates using the power supply voltage supplied from power supply circuit 31 to detect the rotational position of motor 4. For example, detection circuit 32 detects the rotational position (rotation angle) of the motor by detecting a rotational position (rotation angle) of a rotor fixed to a rotation shaft of motor 4.
communicator 33 is, for example, a communication element including an electronic circuit, and performs data communication with communicator 22 of control device 2. As described above, communicator 33 performs two-wire communication with communicator 22 using, for example, two communication lines L2, L3. Communicator 33 transmits a detection result of detection circuit 32 (rotational position information regarding the rotational position of motor 4) to communicator 22, and receives a control signal for encoder 3 from communicator 22. Communicator 33 includes two signal input/output portions 33b, 33c. Two signal input/output portions 33b, 33c input and output data for data communication (the control signal and the rotational position information), and are connected to communication terminals T9, T10 by electrical paths L23, L33, respectively.

Pull-up resistor R4, termination resistor R5, and pull-down resistor R6 are connected in series between electrical path L13 and the ground. Pull-up resistor R4, termination resistor R5, and pull-down resistor R6 are arranged in this order from electrical path L13 toward the ground. electrical path L23 is connected to a node between pull-up resistor R4 and termination resistor R5. As a result, the input voltage of signal input/output portion 33b of communicator 33 is pulled up. Electrical path L33 is connected to a node between termination resistor R5 and pull-down resistor R6. As a result, the input voltage of signal input/output portion 33c of communicator 33 is pulled down.

### (1-2-4) Motor

Motor 4 is, for example, a three-phase AC rotary servomotor, and operates on a three-phase AC voltage supplied from inverter 24 of control device 2. Motor 4 is, for example, a servomotor used in a semiconductor manufacturing apparatus or a production robot. Note that motor 4 is not limited to a servomotor used in a semiconductor manufacturing apparatus or a production robot. Motor 4 includes three power feeding terminals T11, T12, T13 to which the three-phase AC voltage supplied from inverter 24 of control device 2 is input. Three power feeding terminals T11,T12, T13 are connected to three power feeding terminals T5, T6, T7 of control device 2 via three power feeding cables L42, L52, L62, respectively. Motor 4 may be a linear motor that linearly reciprocates.

### (1-2-5) Features of Configuration of Control System

In control device 2, first switch SW1 is disposed in electrical path L7 connecting pull-up power supply 26 and pull-up resistor R1. Therefore, encoder 3 can be attached to and removed from control device 2 in a state where electrical path L7 is interrupted by first switch SW1 (that is, a state where pull-up of electrical path L21 (that is, a portion of communication line L2 in control device 2) is disabled). As a result, it is possible to suppress occurrence of a failure or a malfunction in encoder 3 via communication line L2 when encoder 3 is removed from and attached to control device 2. More specifically, it is possible to suppress occurrence of a failure or a malfunction in encoder 3 due to a surge current flowing from pull-up power supply 26 to encoder 3 through communication line L2 when encoder 3 is attached to control device 2 and it is possible to suppress occurrence of a failure or a malfunction in encoder 3 due to sudden interruption of communication line L2 (for example, forcible detachment of communication line L2) when encoder 3 is removed from control device 2.

### (1-3) Major Effects

As described above, control device 2 according to the exemplary embodiment controls motor 4 on the basis of the detection signal of encoder 3 that detects the operation position of motor 4. Control device 2 includes communicator 22, pull-up resistor R1, pull-up power supply 26 (first power supply), first switch SW1, and controller 27. Communicator 22 can transmit and receive a detection signal to and from encoder 3 via communication line L2. Pull-up resistor R1 is connected to communication line L2. First switch SW1 is provided in electrical path L7 (first electrical path) connecting pull-up power supply 26 and pull-up resistor R1, and completes and interrupts electrical path L7. Controller 27 controls first switch SW1.

With this configuration, encoder 3 can be attached to and removed from control device 2 in a state where electrical path L7 (first electrical path) is interrupted by first switch SW1 (that is, in a state where pull-up of electrical path L7 is disabled). As a result, it is possible to suppress occurrence of a failure or a malfunction in encoder 3 via communication line L2 when encoder 3 is removed from and attached to control device 2 (effect). More specifically, it is possible to suppress occurrence of a failure or a malfunction in encoder 3 due to a surge current flowing from pull-up power supply 26 (first power supply) to encoder 3 through communication line L2 when encoder 3 is attached to control device 2 and it is possible to suppress occurrence of a failure or a malfunction in encoder 3 due to sudden interruption of communication line L2 (for example, forcible detachment of communication line L2) when encoder 3 is removed from control device 2.

Pull-up power supply 26 (first power supply) is a power supply different from encoder power supply circuit 21 that supplies a power supply voltage to encoder 3. With this configuration, the above effect can be produced in a configuration in which pull-up power supply 26 is a power supply different from encoder power supply circuit 21.

In addition, control system 1 according to the present exemplary embodiment includes control device 2, encoder 3, and motor 4. With this configuration, it is possible to provide control system 1 including control device 2 described above.

### (2) Modifications

Modifications of the above-described exemplary embodiment will be described hereinafter. In the following description, the same parts as those in the above exemplary embodiment are denoted by the same reference numerals, description thereof is omitted, and only different parts might be described. In addition, a combination of the above exemplary embodiment and the following modifications may be implemented.

### (2-1) First Modification

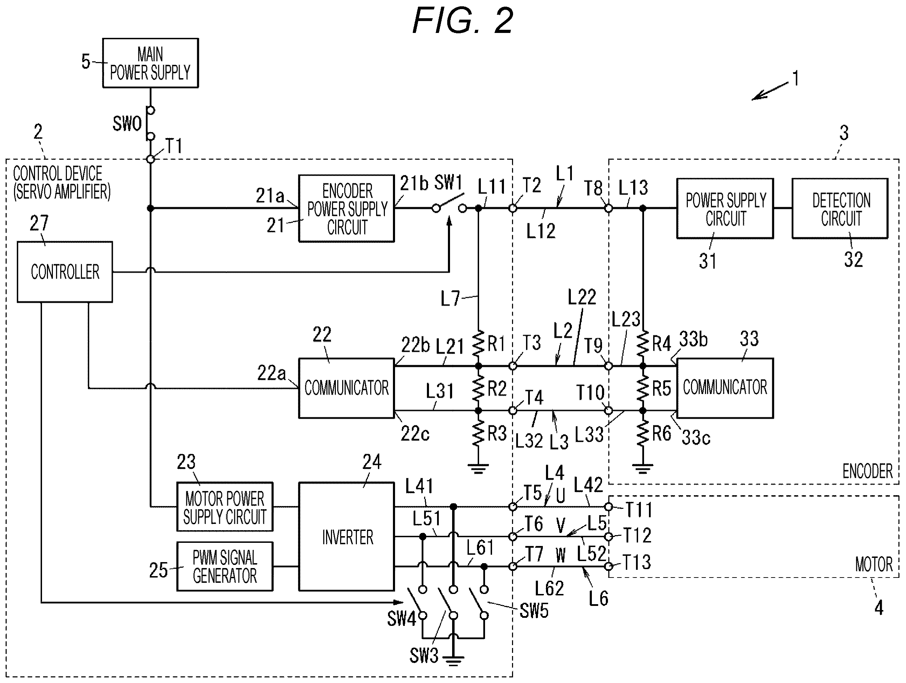

Fig. 2 is a configuration diagram of control system 1 according to a first modification. In control device 2 according to the above exemplary embodiment, encoder power supply circuit 21 and pull-up power supply 26 have different configurations. As illustrated in Fig. 2, however, pull-up power supply 26 may be omitted, and encoder power supply circuit 21 may also serve as a pull-up power supply.

More specifically, as illustrated in Fig. 2, in control device 2 according to the first modification, pull-up power supply 26 and second switch SW2 are omitted in control device 2 according to the above exemplary embodiment. In addition, in control device 2 according to the first modification, electrical path L11 connects encoder power supply circuit 21 and power output terminal T2 similarly to the above exemplary embodiment. In the first modification, first switch SW1 is provided in electrical path L11 to switch completion and interruption of electrical path L11. Similarly to the above exemplary embodiment, electrical path L7 connects pull-up resistor R1 and one end of first switch SW1 (an end on encoder 3 side in the first modification).

In control device 2 according to the first modification, encoder power supply circuit 21 (first power supply) is connected to pull-up resistor R1 by first electrical path (that is, the electrical path constituted by electrical paths L11, L7.). First switch SW1 is provided in the first power supply (more specifically, electrical path L11) to switch completion and interruption of electrical path L11. Pull-up resistor R1 is enabled or disabled by this switching of completion and interruption.

In addition, in control device 2 according to the first modification, encoder power supply circuit 21 supplies a power supply voltage to encoder 3 via power supply line L1, similarly to the above-described exemplary embodiment. Note that, in the first modification, a part (electrical path L11) of power supply line L1 is common to the first power supply. First switch SW1 is further provided in power supply line L1 (more specifically, electrical path L11), and switches completion and interruption of power supply line L1. By this switching of completion and interruption, the supply and a stop of the power supply voltage from encoder power supply circuit 21 to encoder 3 are switched.

In addition, in control device 2 according to the first modification, controller 27 is configured similarly to controller 27 in the above-described exemplary embodiment except that the function of controlling second switch SW2 is omitted.

As described above, in the first modification, first switch SW1 has both functions of switching between the supply and a stop of the power supply voltage from encoder power supply circuit 21 to encoder 3 and switching between enabling and disabling of pull-up resistor R1.

According to the first modification, encoder power supply circuit 21 is used as an encoder power supply circuit and also as a pull-up power supply. In addition, switching of completion and interruption of the first electrical path (the electrical path constituted by electrical paths L11, L7) and switching of completion and interruption of power supply line L1 (the electrical path constituted by electrical paths L11, L13 and power cable L12) can be performed using first switch SW1. As a result, the number of components can be reduced.

In addition, encoder 3 can be attached to and removed from control device 2 in a state where power supply line L1 is interrupted by first switch SW1. As a result, it is possible to suppress occurrence of a failure or a malfunction in encoder 3 due to a surge current flowing from encoder power supply circuit 21 to encoder 3 through power supply line L1 when encoder 3 is attached to control device 2, and it is possible to suppress of occurrence of a failure or a malfunction in encoder 3 due to sudden interruption of power supply line L1 (for example, forcible detachment of power supply line L1) when encoder 3 is removed from control device 2.

### (2-2) Second Modification

### (2-2-1) Description of Configuration

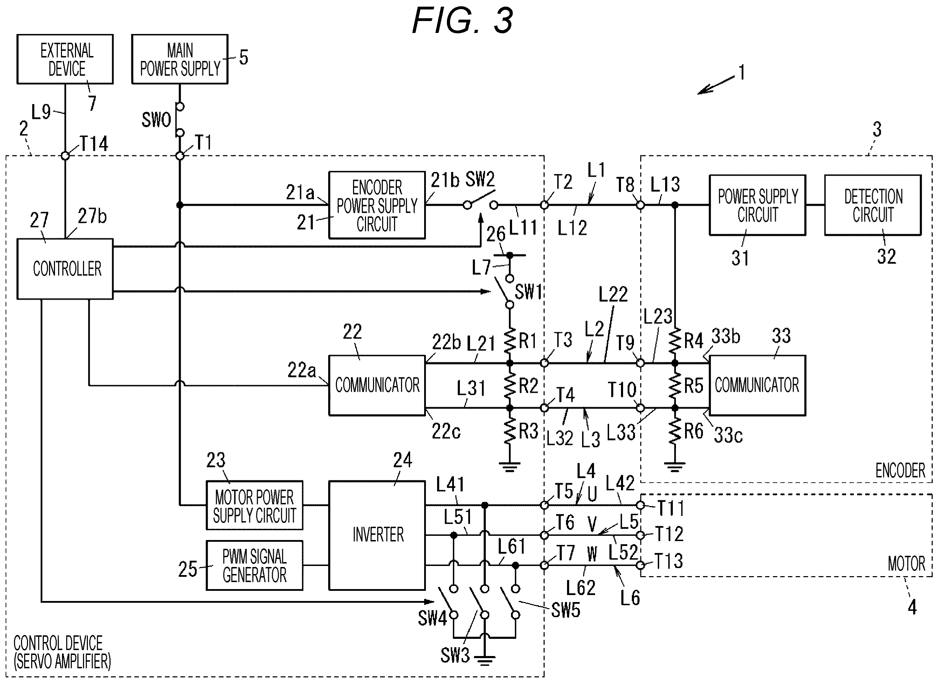

Fig. 3 is a configuration diagram of control system 1 according to a second modification. As illustrated in Fig. 3, in control device 2 according to the second modification, in control device 2 according to the above-described exemplary embodiment, controller 27 controls control targets (for example, first switch SW1, second switch SW2, communicator 22, and first short-circuiting switch SW3 to third short-circuiting switch SW5) on the basis of a trigger signal input from external device 7.

More specifically, control device 2 according to the second modification further includes signal input terminal T14 as an external terminal.

Signal input terminal T14 is connected to signal inputter 27b of controller 27. Signal input terminal T14 is connected to external device 7 via signal cable L9.

External device 7 is, for example, a PLC (Programmable Logic Controller) or an amplifier. External device 7 outputs the trigger signal to signal input terminal T14 of control device 2 via signal cable L9, for example, in accordance with an operation by an operator. The trigger signal is a signal for instructing controller 27 to start execution of predetermined processing on the control targets (for example, a series of processing on a plurality of control targets). External device 7 outputs different types of trigger signals (for example, first to third trigger signals described later) in accordance with operation content of the operator.

In control device 2 according to the second modification, controller 27 is configured similarly to controller 27 in the above-described exemplary embodiment except that the control targets are controlled on the basis of the trigger signal input to signal input terminal T14.

### (2-2-2) Description of Operation

Next, the operation of controller 27 will be described.

### (2-2-2-1) First Operation Example of Controller 27

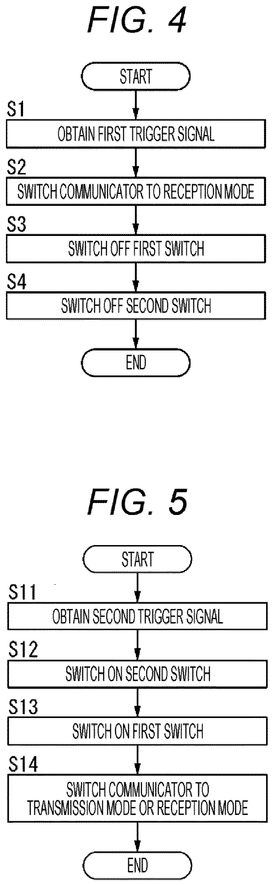

Fig. 4 is a flowchart illustrating a first operation example of controller 27 according to the second modification. When removing encoder 3 from control device 2, the operator operates external device 7 to output a first trigger signal from external device 7. Upon obtaining the first trigger signal from external device 7 via signal input terminal T14, controller 27 in control device 2 then executes a series of processing in steps S1 to S4 illustrated in Fig. 4 on communicator 22, first switch SW1, and second switch SW2.

More specifically, as illustrated in Fig. 4, upon obtaining the first trigger signal (S1), controller 27 first switches the operation mode of communicator 22 to the reception mode (S2). Next, controller 27 switches first switch SW1 from on to off (S3). As a result, electrical path L7 is interrupted, and pull-up resistor R1 in control device 2 is disabled. In addition, the interruption of electrical path L7 suppresses the flow of the power supply current from pull-up power supply 26 to encoder 3 through communication line L2, pull-up resistor R4, and electrical path L13. Next, controller 27 switches second switch SW2 from on to off (S4). As a result, the supply of the power supply voltage from encoder power supply circuit 21 to encoder 3 through power supply line L1 is stopped.

As described above, when encoder 3 is removed from control device 2, first switch SW1 is switched off and then second switch SW2 is switched off. As a result, in the interrupted state of second switch SW2 (that is, in the off state of the power supply to encoder 3), the supply of the power supply current from pull-up power supply 26 to power supply circuit 31 in encoder 3 through communication line L2, pull-up resistor R4, and electrical path L13 is stopped, so that an unstable operation of encoder 3 is suppressed.

In addition, when encoder 3 is removed from control device 2, as described above, after the operation mode of communicator 22 is switched to the reception mode, first switch SW1 is switched from on to off, and second switch SW2 is switched from off to on. As a result, in the off state of second switch SW2 (that is, the off state of the power supply to encoder 3), the establishment of the transmission mode of communicator 22 of control device 2 and the application of a voltage to communication line L2 (that is, an undesirable event) are suppressed.

### (2-2-2-2) Second Operation Example of Controller 27

Fig. 5 is a flowchart illustrating a second operation example of controller 27 according to the second modification. When encoder 3 is attached to control device 2, the operator operates external device 7 to output a second trigger signal from external device 7. Upon obtaining the second trigger signal from external device 7 via signal input terminal T14, controller 27 in control device 2 then executes a series of processing in steps S11 to S14 illustrated in Fig. 5 on communicator 22, first switch SW1, and second switch SW2.

More specifically, as illustrated in Fig. 5, upon obtaining the second trigger signal (S11), controller 27 first switches second switch SW2 from off to on (S12). As a result, the power supply voltage from encoder power supply circuit 21 is supplied to encoder 3 through power supply line L1. Then, controller 27 switches first switch SW1 from off to on (S13). As a result, electrical path L7 is completed, and pull-up resistor R1 in control device 2 is enabled. Controller 27 then switches the operation mode of communicator 22 to the transmission mode or the reception mode (S14).

As described above, when encoder 3 is attached to control device 2, first switch SW1 is switched on after second switch SW2 is switched on. As a result, in the interrupted state of second switch SW2 (that is, in the off state of the power supply to encoder 3), the supply of the power supply current from pull-up power supply 26 to power supply circuit 31 in encoder 3 through communication line L2, pull-up resistor R4, and electrical path L13 is stopped, so that an unstable operation of encoder 3 is suppressed.

In addition, when encoder 3 is attached to control device 2, as described above, after second switch SW2 is switched on and first switch SW1 is switched on, the operation mode of communicator 22 is switched to the reception mode or the transmission mode. As a result, in the off state of the power supply to encoder 3 (that is, the off state of second switch SW2), the establishment of the transmission mode of communicator 22 of control device 2 and the application of a voltage to communication line L2 (that is, an undesirable event) are suppressed.

Note that, in the present exemplary embodiment, a case where controller 27 performs both the operation of switching on and off each of first switch SW1 and second switch SW2 and the switching of the operation mode of communicator 22 will be described. Controller 27, however, may omit the switching of the operation mode of communicator 22 and may only switch on and off first switch SW1 and second switch SW2.

### (2-2-2-3) Third Operation Example of Controller

When motor 4 is removed from control device 2, the operator operates external device 7 to output a third trigger signal from external device 7. Upon obtaining the third trigger signal from external device 7 via signal input terminal T14, controller 27 in control device 2 executes the following processing on first short-circuiting switch SW3 to third short-circuiting switch SW5.

More specifically, upon obtaining the third trigger signal, controller 27 switches first short-circuiting switch SW3 to third short-circuiting switch SW5 from off to on. As a result, electric energy in motor 4 is discharged to the ground through first short-circuiting switch SW3 to third short-circuiting switch SW5. This discharge completes the discharge of motor 4 in a short time. After completion of the discharge of motor 4 (that is, after elapse of a predetermined time from a start of the discharge), motor 4 is removed from control device 2.

As described above, when motor 4 is removed from control device 2, first short-circuiting switch SW3 to third short-circuiting switch SW5 are turned on immediately before the removal, and a dynamic brake is applied to motor 4. As a result, since the discharge time of motor 4 is shortened, time required for removing motor 4 from control device 2 can be shortened. In particular, this is effective for a configuration in which encoder 3 and motor 4 are integrated. In this case, controller 27 obtains the first trigger signal and the third trigger signal from external device 7 immediately before removing encoder 3 and motor 4 from control device 2.

### (2-3) Third Modification

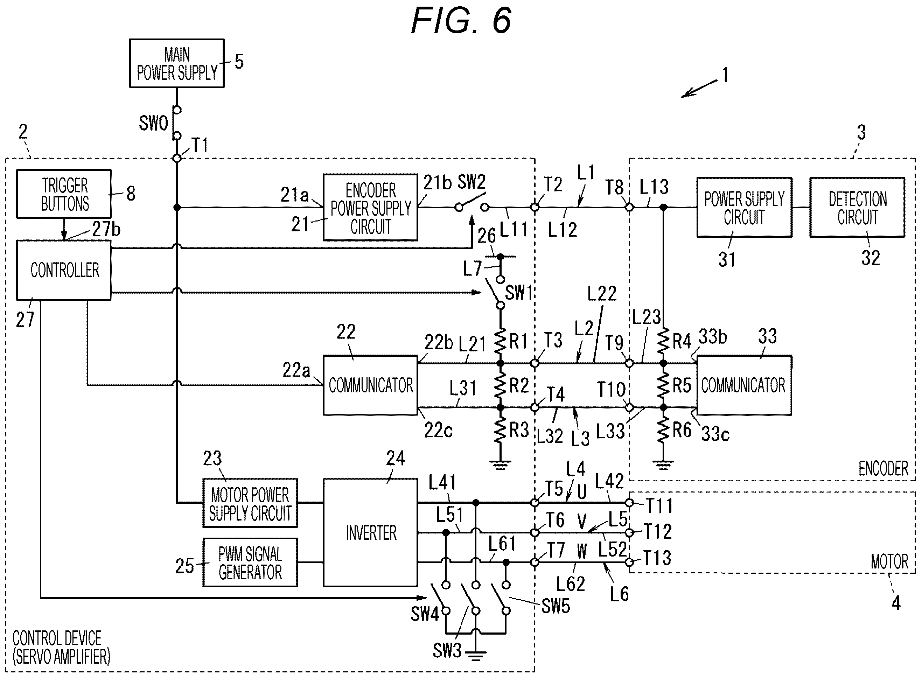

Fig. 6 is a configuration diagram of control system 1 according to a third modification.

In control device 2 according to the second modification, controller 27 controls the control targets (for example, first switch SW1, second switch SW2, first short-circuiting switch SW3 to third short-circuiting switch SW5, and communicator 22) on the basis of the trigger signal from external device 7. In control device 2 according to the third modification, on the other hand, as illustrated in Fig. 6, controller 27 controls the control targets on the basis of a trigger signal from trigger buttons 8 (operation part) provided in control device 2. Note that trigger buttons 8 are an example of an operation part that receives an operation from the operator. The operation part is not limited to an operation part of a button type like trigger buttons 8.

More specifically, control device 2 according to the third modification is configured similarly to control device 2 according to the second modification except that trigger buttons 8 are provided instead of signal input terminal T14.

Trigger buttons 8 include a plurality of buttons corresponding one-to-one to different types of trigger signals (for example, the first to third trigger signals in the second modification). When selectively pressed by the operator, the plurality of buttons output a trigger signal of a corresponding type to controller 27. Trigger buttons 8 are disposed, for example, on a surface of a housing of control device 2.

In control device 2 according to the third modification, upon obtaining each type of trigger signal (for example, the first to third trigger signals in the second modification) from trigger buttons 8, controller 27 performs processing according to the type of trigger signal on the control targets as in the first operation example to the third operation example of the controller in the second modification.

According to the third modification, the control targets can be controlled by an input operation performed on trigger buttons 8 (operation part).

### (2-4) Fourth Modification

### (2-4-1) Description of Configuration

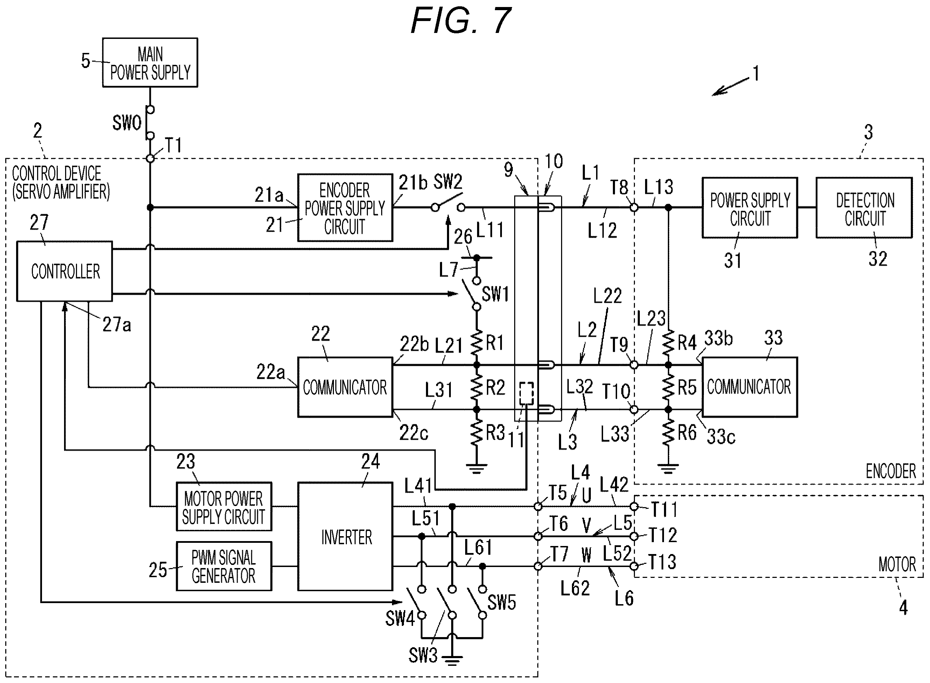

Fig. 7 is a configuration diagram of a control system according to a fourth modification.

In the second modification, controller 27 of control device 2 controls the control targets (for example, first switch SW1, second switch SW2, first short-circuiting switch SW3 to third short-circuiting switch SW5, and communicator 22) on the basis of the trigger signal from external device 7. In the fourth modification, on the other hand, as illustrated in Fig. 7, control device 2 and encoder 3 are detachably connected by first connector 9 and second connector 10, and controller 27 of control device 2 controls the control targets on the basis of a trigger signal output in accordance with attachment and detachment of first connector 9 and second connector 10.

More specifically, as illustrated in Fig. 7, in control device 2 in the fourth modification, signal input terminal T14 is omitted in control device 2 according to the second modification. In addition, control device 2 in the fourth modification includes first connector 9 instead of power output terminal T2 and communication terminals T3, T4 in control device 2 in the second modification. In addition, one end of each of power cable L12 and communication cables L22, L32 is connected to second connector 10. In addition, control device 2 in the fourth modification further includes detector 11 that detects attachment and detachment of first connector 9 and second connector 10 in control device 2 in the second modification.

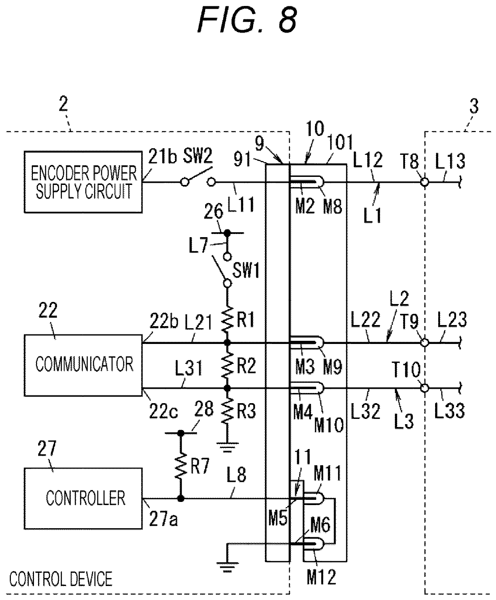

First connector 9 is, for example, a male connector. First connector 9 is connected to control device 2. More specifically, first connector 9 is disposed in such a way as to be exposed to the outside from the surface of the housing of control device 2. Fig. 8 is a partially enlarged view of Fig. 7, and is a configuration diagram illustrating a connector connection state. As illustrated in Fig. 8, first connector 9 includes first connector housing 91, male power output terminal M2, a pair of male communication terminals M3, M4, and a pair of male first terminals M5, M6.

Power output terminal M2, the pair of communication terminals M3, M4, and the pair of first terminals M5, M6 are accommodated and disposed in first connector housing 91. Power output terminal M2 is connected to one end of electrical path L11, and is connected to the outputter of encoder power supply circuit 21 via electrical path L11. The pair of communication terminals M3, M4 is connected to one ends of electrical paths L21, L31, respectively, and is connected to signal input/output portions 22b, 22c of communicator 22 via electrical paths L21, L31. One first terminal M5 among the pair of first terminals M5, M6 is connected to signal inputter 27a of controller 27 by electrical path L8, and another first terminal M6 is grounded.

Signal inputter 27a of controller 27 is connected to second power supply 28 (voltage Vcc) via resistor R7 and is also connected to one first terminal M5. That is, second power supply 28 is connected to signal inputter 27a of controller 27 and one first terminal M5 via resistor R7.

Detector 11 detects attachment and detachment (connection and separation) between first connector 9 and second connector 10, and outputs a first level signal or a second level signal as a trigger signal to signal inputter 27a of controller 27 in accordance with the connection and separation. That is, detector 11 changes a voltage input to signal inputter 27a of controller 27 in accordance with attachment and detachment of first connector 9 and second connector 10. The first level signal is a signal indicating that first connector 9 and second connector 10 are separated from each other, and is, for example, an H (high) level signal. The second level signal is a signal indicating that first connector 9 and second connector 10 are connected to each other, and is, for example, an L (low) level signal.

Detector 11 includes the pair of first terminals M5, M6, second power supply 28, and resistor R7. The pair of first terminals M5, M6 is connected to and separated from a pair of second terminals M11, M12 (described later) of second connector 10 in accordance with the connection and separation between first connector 9 and second connector 10. As described above, the pair of first terminals M5, M6 is connected to and separated from the pair of second terminals M11, M12 short-circuited to each other, so that the pair of first terminals M5, M6 is connected to and disconnected from each other. When the pair of first terminals M5, M6 is disconnected from each other, voltage Vcc of second power supply 28 is input to signal inputter 27a of controller 27 as the first level signal (H level signal). In addition, when the pair of first terminals M5, M6 is connected to each other, signal inputter 27a of controller 27 is connected to the ground, and a ground potential is input to signal inputter 27a of controller 27 as the second level signal (L level signal).

Controller 27 in the fourth modification is configured similarly to controller 27 in the second modification except that the control targets are controlled on the basis of the trigger signal (the first level signal or the second level signal) input from detector 11.

Second connector 10 is connected to encoder 3 via power cable L12 and communication cables L22, L32. Second connector 10 is a female connector detachably connected to male first connector 9. As illustrated in Fig. 8, second connector 10 includes second connector housing 101, female power input terminal M8, a pair of female communication terminals M9, M10, and a pair of female second terminals M11, M12.

Power input terminal M8, the pair of communication terminals M9, M10, and the pair of second terminals M11, M12 are accommodated and disposed in second connector housing 101.

Power input terminal M8 is a female terminal detachably connected to male power output terminal M2 of first connector 9. Power input terminal M8 is connected to one end of power cable L12, and is connected to power supply circuit 31 of encoder 3 via power cable L12 and electrical path L13. The pair of communication terminals M9, M10 corresponds one-to-one to the pair of communication terminals M3, M4 of first connector 9, and is female terminals detachably connected to the corresponding communication terminals. The pair of communication terminals M9, M10 is connected to one ends of communication cables L22, L32, respectively, and is connected to communicator 33 of encoder 3 via communication cables L22, L32 and electrical paths L23, L33. The pair of second terminals M11, M12 corresponds one-to-one with the pair of male first terminals M5, M6 of first connector 9, and is female terminals detachably connected to the corresponding first terminals. That is, second terminal M11 corresponds to first terminal M5, and second terminal M12 is connected to first terminal M6. The pair of second terminals M11, M12 is short-circuited to each other.

### (2-4-2) Description of Operation of Detector

An operation when detector 11 outputs the trigger signal (the first trigger signal or the second trigger signal) to signal inputter 27a of controller 27 at times of connection and separation between first connector 9 and second connector 10 will be described.

### (2-4-2-1) Operation during Separation of First Connector and Second Connector

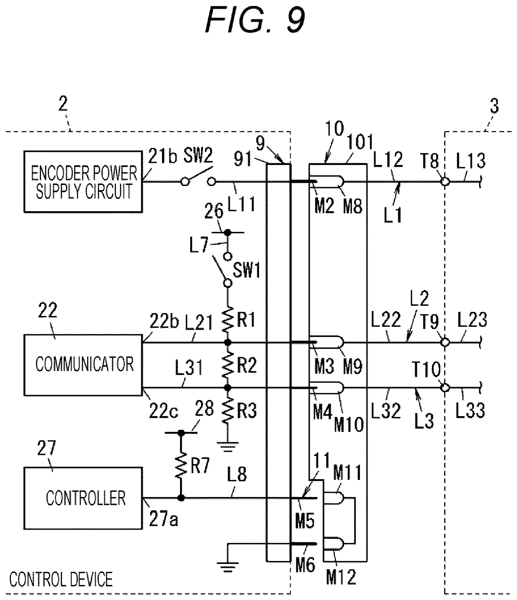

Fig. 9 is a configuration diagram illustrating a connector separation state in the control system according to the fourth modification.

As illustrated in Fig. 9, when first connector 9 and second connector 10 are separated from each other, first connector housing 91 of first connector 9 and second connector housing 101 of second connector 10 are separated from each other. As a result, power output terminal M2, the pair of communication terminals M3, M4, and the pair of first terminals M5, M6 in first connector 9 are separated from power input terminal M8, the pair of communication terminals M9, M10, and the pair of second terminals M11, M12 in second connector 10, respectively. By separating the pair of first terminals M5, M6 from the pair of second terminals M11, M12 at this time, the input voltage to signal inputter 27a of controller 27 is pulled up to voltage Vcc of second power supply 28. As a result, voltage Vcc of second power supply 28 is input to signal inputter 27a of controller 27 as the first level signal (trigger signal).

Upon obtaining the first level signal (trigger signal), controller 27 controls first switch SW1, second switch SW2, and communicator 22 as described in the first operation example of the controller in the second modification, or controls first short-circuiting switch SW3 to third short-circuiting switch SW5 to apply the dynamic brake to motor 4 as described in the third operation example of the controller in the second modification.

As illustrated in Fig. 8, when first connector 9 and second connector 10 are connected to each other, first connector housing 91 of first connector 9 and second connector housing 101 of second connector 10 are connected to each other. As a result, power output terminal M2, the pair of communication terminals M3, M4, and the pair of first terminals M5, M6 in first connector 9 are connected to power input terminal M8, the pair of communication terminals M9, M10, and the pair of second terminals M11, M12 in second connector 10, respectively. By connecting the pair of first terminals M5, M6 to the pair of second terminals M11, M12 at this time, signal inputter 27a of controller 27 is connected to the ground via electrical path L8, the pair of first terminals M5, M6, and the pair of second terminals M11, M12. As a result, the ground potential is input to signal inputter 27a of controller 27 as the second level signal (trigger signal).

Note that upon obtaining the second level signal (trigger signal), controller 27 controls first switch SW1, second switch SW2, and communicator 22 as described in the second operation example of the controller in the second modification.

### (2-4-3) Effects of Fourth Modification

According to the fourth modification, the control targets (for example, first switch SW1, second switch SW2, first short-circuiting switch SW3 to third short-circuiting switch SW5, and communicator 22) can be automatically controlled through attachment and detachment of first connector 9 and second connector 10 (that is, attachment and detachment of control device 2 and encoder 3). In addition, detector 11 can be achieved with a simple configuration.

### (3) Aspects

From the above exemplary embodiment and modifications, the present disclosure includes the following aspects.

Control device (2) according to a first aspect is a control device that controls motor (4) based on a detection signal of encoder (3) that detects an operation position of motor (4). Control device (2) includes communicator (22), pull-up resistor (R1), first power supply (26; 21), first switch (SW1), and controller (27). Communicator (22) transmits and receives a detection signal to and from encoder (3) via communication line (L2). Pull-up resistor (R1) is connected to communication line (L2). First switch (SW1) is provided in first electrical path (L7; L11, L7) connecting first power supply (26; 21) and pull-up resistor (R1), and completes and interrupts first electrical path (L7; L11, L7). Controller (27) controls first switch (SW1).

With this configuration, encoder (3) can be attached to and removed from control device (2) in a state where first electrical path (L7; L11, L7) is interrupted by first switch (SW1). As a result, it is possible to suppress occurrence of a failure or a malfunction in encoder (3) via communication line (L2) when encoder (3) is removed from and attached to control device (2). More specifically, when encoder (3) is attached to control device (2), it is possible to suppress occurrence of a failure or a malfunction in encoder (3) due to a surge current flowing from first power supply (26; 21) to encoder (3) through communication line (L2), and it is possible to suppress occurrence of a failure or a malfunction in encoder (3) due to sudden interruption (for example, forcible detachment) of communication line (L2) when encoder (3) is removed from control device (2).

In control device (2) according to a second aspect, in the first aspect, first power supply (21) is encoder power supply circuit (21) that supplies a power supply voltage to encoder (3) via power supply line (L1). First switch (SW1) is provided in power supply line (L1) to complete and interrupt power supply line (L1).

With this configuration, first power supply (21) can be used as both pull-up power supply and encoder power supply circuit (21). In addition, first electrical path (electrical path constituted by electrical paths L11, L7) can be completed and interrupted and power supply line (L1) can be completed and interrupted by first switch (SW1). As a result, the number of components can be reduced. In addition, encoder (3) can be attached to and removed from control device (2) in a state where power supply line (L1) is interrupted by first switch (SW1).

In control device (2) according to a third aspect, in the first aspect, first power supply (26) is pull-up power supply (26), and is a power supply different from encoder power supply circuit (21) that supplies a power supply voltage to encoder (3).

With this configuration, in a configuration in which first power supply (26) is pull-up power supply (26) different from encoder power supply circuit (21), the effects of the first aspect can be produced.

Control device (2) according to a fourth aspect further includes, in the third aspect, encoder power supply circuit (21) and second switch (SW2). Second switch (SW2) completes and interrupts power supply line (L1) connecting encoder power supply circuit (21) and encoder (3). Controller (27) further controls second switch (SW2).

With this configuration, encoder (3) can be attached to and removed from control device (2) in a state where power supply line (L1) is interrupted by second switch (SW2).

In control device (2) according to a fifth aspect, in the fourth aspect, when encoder (3) is removed from control device (2), controller (27) interrupts first electrical path (L7) using first switch (SW1), and then interrupts power supply line (L1) using second switch (SW2).

With this configuration, when encoder (3) is removed from control device (2), it is possible to suppress occurrence of a failure or a malfunction in encoder (3).

In control device (2) according to a sixth aspect, in the fourth or fifth aspect, when encoder (3) is attached to control device (2), controller (27) completes power supply line (L1) using second switch (SW2), and then completes first electrical path (L7) using first switch (SW1).

With this configuration, when encoder (3) is attached to control device (2), it is possible to suppress occurrence of a failure or a malfunction in encoder (3).

In control device (2) according to a seventh aspect, in the fifth aspect, communicator (22) can switch between a transmission mode and a reception mode. When encoder (3) is removed from control device (2), controller (27) interrupts first electrical path (L7) using first switch (SW1) after switching communicator (22) to the reception mode.

With this configuration, when encoder (3) is removed from control device (2), it is possible to suppress application of a voltage to communication line (L2) due to the transmission mode of communicator (22) in a state where power supply line (L1) is interrupted by second switch (SW2) and the power supply to encoder (3) is stopped. As a result, it is possible to suppress occurrence of a malfunction or a failure in encoder (3).

In control device (2) according to an eighth aspect, in the sixth aspect, communicator (22) can switch between a transmission mode and a reception mode. When encoder (3) is attached to control device (2), controller (27) switches communicator (22) to the transmission mode or the reception mode after completing first electrical path (L7) using first switch (SW1).

With this configuration, when encoder (3) is attached to control device (2), it is possible to suppress application of a voltage to communication line (L2) due to the transmission mode of communicator (22) in a state where power supply line (L1) is interrupted by second switch (SW2) and the power supply to encoder (3) is stopped. As a result, it is possible to suppress occurrence of a failure or a malfunction in encoder (3).

In control device (2) according to a ninth aspect, in any one of the fourth to eighth aspects, controller (27) controls first switch (SW1), second switch (SW2), and switching of communicator (22) to a transmission mode or a reception mode based on a trigger signal from external device (7).

With this configuration, first switch (SW1), second switch (SW2), and switching of communicator (22) to the transmission mode or the reception mode can be controlled using the trigger signal from external device (7). As a result, first switch (SW1) can be remotely controlled.

Control device (2) according to a tenth aspect further includes, in any one of the fourth to eighth aspects, operation part (8) that receives an operation for outputting a trigger signal. Controller (27) controls first switch (SW1, second switch (SW2), and switching of communicator (22) to the transmission mode or the reception mode) based on the trigger signal from operation part (8).

With this configuration, first switch (SW1), second switch (SW2), and switching of communicator (22) to the transmission mode or the reception mode can be controlled using an input operation performed on operation part (8).

Control device (2) according to an eleventh aspect further includes, in any one of the first to eighth aspects, first connector (9) and detector (11). First connector (9) is detachably connected to second connector (10) connected to encoder (3). Detector (11) detects attachment and detachment of first connector (9) and second connector (10). Controller (27) controls first switch (SW1) based on a detection result of detector (11).

With this configuration, first switch (SW1) can be automatically controlled through attachment and detachment of first connector (9) and second connector (10) (that is, attachment and detachment of control device (2) and encoder (3)).

In control device (2) according to a twelfth aspect, in the eleventh aspect, second connector (10) includes a pair of second terminals (M11, M12) short-circuited to each other. Detector (11) includes a pair of first terminals (M5, M6) and second power supply (28). The pair of first terminals (M5, M6) is provided in first connector (9), and is detachably connected to the pair of second terminals (M11, M12) through connection between first connector (9) and second connector (10). Second power supply (28) is connected to one of the pair of first terminals (M5, M6) and signal inputter (27a) of controller (27) via resistor (R7). Another of the pair of first terminals (M5, M6) is connected to ground. Detector (11) changes an input voltage to signal inputter (27a) of controller (27) in accordance with attachment and detachment of first connector (9) and second connector (10).

With this configuration, detector (11) can be achieved with a simple configuration.

In control device (2) according to a thirteenth aspect, in the ninth or tenth aspect, motor (4) is a three-phase alternating current motor. Control device (2) includes inverter (24) and at least one short-circuiting switch (SW3 to SW5). Inverter (24) supplies a three-phase alternating current to motor (4) via three power feeding lines (L4 to L6). At least one short-circuiting switch (SW3 to SW5) is provided in at least one of three power feeding lines (L4 to L6), and connects and disconnects the provided power feeding line and the ground to and from each other. Controller (27) controls short-circuiting switch (SW3 to SW5) based on the trigger signal.

With this configuration, short-circuiting switch (SW3 to SW5) constitutes a dynamic brake of motor (4). As a result, the dynamic brake can be applied to motor (4) using the trigger signal from external device (7) or operation part (8). As a result, since discharge time of motor (4) is shortened, time required for removing motor (4) from control device (2) can be shortened. This is particularly effective for a configuration in which encoder (3) and motor (4) are integrated together.

Control system (1) according to a fourteenth aspect includes control device (2) according to any one of the first to thirteenth aspects, encoder (3), and motor (4).

With this configuration, it is possible to provide control system (1) including control device (2).

### INDUSTRIAL APPLICABILITY

With the control device and the control system in the present disclosure, it is possible to suppress occurrence of a failure or a malfunction in an encoder via a communication line when the encoder is removed from and attached to the control device. Therefore, the control device and the control system in the present disclosure are industrially useful.

### REFERENCE MARKS IN THE DRAWINGS

1 :control system
2: Control Device
3: Encoder
4: Motor
7: external device
8: trigger buttons
9: first connector
10: second connector
11: detector
26: pull-up power supply (first power supply)
21: encoder power supply circuit (first power supply)
22: communicator
24: inverter
27: controller
27a, 27b: signal inputter
33: communicator
L1: power supply line
L2, L3: communication line
L4 to L6: power feeding line
L7, L8, L11, L13, L21, L23, L31, L33, L41, L51, L61: electrical path
M5, M6: first terminal
M11, M 12: second terminal
R1, R4: pull-up resistor
R2, R5: termination resistor
R3, R6: pull-down resistor
R7: resistor
SW1: first switch
SW2: second switch
SW3: first short-circuiting switch
SW4: second short-circuiting switch
SW5: third short-circuiting switch

## Claims

1. A control device that controls a motor based on a detection signal of an encoder that detects an operation position of the motor, the control device comprising:
a communicator that transmits and receives the detection signal to and from the encoder via a communication line;
a pull-up resistor connected to the communication line;
a first power supply;
a first switch that is provided in a first electrical path connecting the first power supply and the pull-up resistor and completes and interrupts the first electrical path; and
a controller that controls the first switch.

2. The control device according to Claim 1, wherein
the first power supply is an encoder power supply circuit that supplies a power supply voltage to the encoder via a power supply line, and
the first switch is provided in the power supply line to complete and interrupt the power supply line.

3. The control device according to Claim 1, wherein
the first power supply is a pull-up power supply, and is a power supply different from an encoder power supply circuit that supplies a power supply voltage to the encoder.

4. The control device according to Claim 3, further comprising:
the encoder power supply circuit; and
a second switch that completes and interrupts a power supply line connecting the encoder power supply circuit and the encoder, wherein
the controller further controls the second switch.

5. The control device according to Claim 4, wherein
when the encoder is removed from the control device, the controller interrupts the first electrical path using the first switch, and then interrupts the power supply line using the second switch.

6. The control device according to Claim 4 or 5, wherein
when the encoder is attached to the control device, the controller completes the power supply line using the second switch and then completes the first electrical path using the first switch.

7. The control device according to Claim 5, wherein
the communicator is capable of switching between a transmission mode and a reception mode, and
when the encoder is removed from the control device, the controller interrupts the first electrical path using the first switch after switching the communicator to the reception mode.

8. The control device according to Claim 6, wherein
the communicator is capable of switching between a transmission mode and a reception mode, and
when the encoder is attached to the control device, the controller switches the communicator to the transmission mode or the reception mode after completing the first electrical path using the first switch.

9. The control device according to any one of Claims 4 to 8, wherein
the controller controls the first switch, the second switch, and switching of the communicator to a transmission mode or a reception mode based on a trigger signal from an external device.

10. The control device according to any one of Claims 4 to 8, further comprising:
an operation part that receives an operation for outputting a trigger signal, wherein
the controller controls the first switch, the second switch, and switching of the communicator to a transmission mode or a reception mode based on the trigger signal from the operation part.

11. The control device according to any one of Claims 1 to 8, further comprising:
a first connector detachably connected to a second connector connected to the encoder; and
a detector that detects attachment and detachment of the first connector and the second connector, wherein
the controller controls the first switch based on a detection result of the detector.

12. The control device according to Claim 11, wherein
the second connector includes a pair of second terminals short-circuited to each other,
the detector includes:
a pair of first terminals provided in the first connector and detachably connected to the pair of second terminals as a result of connection between the first connector and the second connector; and
a second power supply connected to one of the pair of first terminals and a signal inputter of the controller via a resistor,
another of the pair of first terminals is connected to ground, and
the detector changes an input voltage to the signal inputter of the controller in accordance with attachment and detachment of the first connector and the second connector.

13. The control device according to Claim 9 or 10, wherein
the motor is a three-phase alternating current motor,
the control device further comprising:
an inverter that supplies a three-phase alternating current to the motor via three power feeding lines; and
at least one short-circuiting switch that is provided in at least one of the three power feeding lines and that connects and disconnects the power feeding line and ground to and from each other, and
the controller controls the short-circuiting switch based on the trigger signal.

14. A control system comprising:
the control device according to any one of Claims 1 to 13;
the encoder; and
the motor.
